# EUROPEAN PATENT SPECIFICATION

(11) **EP 4 032 660 B1**
(45) Date of publication and mention of the grant of the patent: **09.08.2023**
(21) Application number: 21217912.1
(22) Date of filing: 28.12.2021
(51) Int. Cl.: B25J 5/02, E04G 21/22

(54) **CONSTRUCTION ROBOT AND METHOD OF AUTOMATIC ATTACHMENT OF BUILDING BLOCKS AGAINST A VERTICAL WALL**
BAUROBOTER UND VERFAHREN ZUM AUTOMATISCHEN ANBRINGEN VON BAUSTEINEN AN EINER VERTIKALEN WAND
ROBOT DE CONSTRUCTION ET PROCÉDÉ DE FIXATION AUTOMATIQUE DE BLOCS DE CONSTRUCTION CONTRE UNE PAROI VERTICALE

(30) Priority: 28.12.2020 DK PA202001465
(43) Date of publication of application: 27.07.2022
(73) Proprietor: Briiso Aps, 4400 Kalundborg (DK)
(72) Inventor: Andersen, Lars Peder, 4400 Kalundborg (DK)
(74) Representative: Andreasen, Søren Laursen Vasegaard

(56) References cited:
- WO-A1-2020/047575
- CN-A- 108 868 169
- CN-U- 210 879 667
- US-A- 3 950 914

## Description

### FIELD OF THE INVENTION

The present invention relates to a construction robot configured for automatically attaching and fastening building blocks, such as tiles or bricks, onto vertical walls. The invention also relates to a method of automatic attachment of building blocks against a vertical wall by using such robot.

### BACKGROUND OF THE INVENTION

For building walls, bricklayer robots have been developed, which place one brick upon the other according to a programmed pattern. An example is disclosed in Chinese patent application CN107357294A by Xiamen Huawei IOT Tech Co Ltd. The bricks are grabbed from above by an arm having a pair of pick-up claws between which the brick is held clamped for holding it, after which the arm moves it in place on top of other bricks.

For placing tiles against a vertical wall, tile-attaching robots, typically, use suction cups to hold the tile at an end of a multi-axes arm, where the arm then moves the tile into the correct position and orientation against the vertical wall.

An example of a tile-attaching robot is disclosed in Chinese utility model CN210879667U, assigned to Anhui Chuangwei Robot Tech Industrial Park, wherein the robot comprises a trolley on rails for driving the trolley along a vertical wall. The trolley comprises a magazine of tiles which are automatically dropped onto a conveyor and moved underneath a glue dispenser before they are flipped from a horizontal orientation to a vertical orientation. Once in the vertical orientation, the tiles are attached to a multi-axes robot arm by suction and then moved by the robot arm into the right position and orientation on the vertical wall and pressed against the wall.

However, the use of suction cups requires a smooth surface of the tiles, as otherwise, the suction cup would not be efficient. Also, multi-axes arms are relatively complex and costly, which increases costs not only for production of the robot but also for programming and maintenance, which is not always desired for simple tasks as attaching tiles or other building blocks to vertical walls.

A further example of tile-attaching robots is WO2020047575 (A1), which provides a visual sensor and robotic system for tile-attachment, however while the system provides a useful solution to attaching a tile, it is still relative complex and costly.

The size of tiles will typically be an approximate size which is affected by manufacturing and production processes. Accordingly, there may be acceptable size variation within the batch of tiles you receive. The prior art tile-attaching robots are, however, not able to compensate for the dimensional variations of the tiles. Therefore, there is need of an alternative to the prior art to overcome this drawback.

Accordingly, for automatic fastening tiles or bricks against vertical walls by a construction robot, there is a general need for improvement.

### DESCRIPTION / SUMMARY OF THE INVENTION

It is therefore an objective of the invention to provide an improvement in the art. In particular, it is an objective to provide an improved or alternative construction robot for automatic fastening building blocks against vertical walls. It is also an object to provide these and further objectives and obtained advantages will be explained in the following. One or more of the objectives is solved by a construction robot and a method of its operation, as described in the claims and in the following.

In short, a construction robot grabs a building block, such as a tile or brick, by using clamp jaws and places it automatically according to its programmed computer instructions against the vertical surface of a vertical wall with glue in between the building block and the wall.

The building blocks are defined by an attachment side for attachment onto the vertical wall, an opposite oriented second side, which after attachment faces away from the wall, and edges around the attachment side and the opposite, second side. For example, the building blocks are flat slabs with edges having a thickness T that is narrower than the length L and width W of the slabs. For example, the building blocks are provided as slabs that are elongate in a longitudinal direction of the slab and which comprises two ends, the two ends comprising the edges with the smallest areas. Optionally, the building blocks have a length L in the range of 15 to 50 cm, a height H in the range of 3 to 12 cm, and a thickness T of the slab in the range of 1 to 5 cm, the length and height defining the size of the attachment side.

The construction robot comprises a group of components which are used for the construction and which are moved as a group along the wall during the attachment of building blocks against the vertical surface of the vertical wall. The group of components includes a magazine of building blocks, a glue container, a glue dispenser, a conveyor that moves a building block from the magazine to the glue dispenser, and a gripper station for gripping a building block and attaching it with glue against the wall.

In operation, building blocks, for example in stacked condition, are provided in the magazine. In an automated sequence, a number of steps are performed by the construction robot, as described in the following.

The magazine supplies the building blocks onto the conveyor, typically one after the other, for example in an orientation where the attachment side of the building block is facing upwards. The conveyor moves the received building block from the magazine to the glue dispenser. If the building block is not received by the conveyor with the attachment side facing upwards, the orientation is changed so that the attachment side is facing upwards, once the building block is under the glue dispenser. By the glue dispenser, glue is dispensed from the glue container down onto the attachment side, which is facing upwards, for example while the building block is still located on the conveyor.

After the glue has been applied onto the attachment side, a gripper station automatically receives the building block from the conveyor, for example by translation of the building block on and along the conveyor to an end of the conveyor and by transfer from the conveyor to the gripper station. The building block is gripped by a gripper and held by the gripper during a rotation of the building block in the gripper station until the attachment side is vertical and facing the vertical surface of the vertical wall. By the gripper station, the attachment side is moved towards the wall with the glue coming into contact with the vertical surface of the vertical wall while the building block is held by the gripper.

However, in contrast to the construction robot as disclosed in the above-mentioned Chinese utility model CN210879667U, instead of suction, the gripper of the gripper station comprises a pair of clamp jaws configured for engaging with opposite edges of the building block and holding the building block clamped between the clamp jaws by a force against the edges. As already mentioned, for rough surfaces, which are especially of interest for facades, vacuum suction mechanisms do not work properly. Accordingly, the robot described herein has a greater versatility than in the described prior art.

For example, the gripper station is receiving the building block from the conveyor with the attachment side oriented upwards, typically in horizontal orientation, and, without changing the orientation of the building block, the gripper is clamping the edges by the clamp jaws while the attachment side is still oriented upwards.

In the invention, when having received the building block in the gripper station, while the building block is still in an orientation with the attachment side oriented upwards, the clamp jaws are holding the edges between the clamp jaws, and the gripper with the clamp jaws is subsequently rotated together with the building block from the received orientation with the upwards oriented attachment side to an orientation where the attachment side is vertical and facing the wall.

In comparison, the above-mentioned Chinese utility model CN210879667U discloses tilting the tile from horizontal to vertical first in a tilting station, before the robot arm with the suction mechanism is picking up the tile in upright position from the tilting station. Thus, two rotational mechanisms are used in CN210879667U, namely the tilting station on the trolley for rotating the tile from horizontal to vertical orientation and the robot arm that moves the tile from the tilting station and away from the trolley towards and against the wall. In contrast to this disclosure, the function of the invention, where the clamp jaws are clamping the building block with the upwards-oriented attachment side, is advantageous in that it simplifies the system, seeing that the gripper station does the tilting as well as the attachment to the wall, so that a separate tilting station, as in CN210879667U, is not needed. Accordingly, of the invention provides a simplification relatively to prior art construction robots for tiles. The term of vertical orientation of the attachment side is used to express an orientation in a vertical plane. When the building block is oriented vertical and facing the vertical surface of the vertical wall, the vertical plane is parallel to the surface of the wall, if the surface is a plane surface, which is typically the case. However, in special situations, where the wall is curved in the horizontal direction, this can also be handled by the robot if correspondingly programmed and moved along the curving wall.

In some useful embodiments, the clamp jaws are mounted on a rotational axle and configured for rotation only in a single rotational dimension. During operation, the clamp jaws are rotated together with the building block on the rotational axle from the first orientation, for example where the attachment side is oriented upwards, to the second orientation, where the attachment side is oriented vertical for attachment to the vertical surface of the vertical wall. Typically, the first orientation is a horizontal orientation. In these embodiments, the limitation of the rotation in a single rotational dimension is a simplification as compared to a multi-axis arm, as disclosed in the above-mentioned Chinese utility model CN210879667U. Accordingly, in comparison thereto, these embodiments involve substantial cost reduction in the production of such construction robots.

For example, the building blocks are provided as slabs that are elongate in a longitudinal direction of the slab and which comprises two ends, the two ends comprising the edges with the smallest areas. Optionally, such elongate slabs are transported on the conveyor in a transport direction, where the longitudinal direction is parallel to the transport direction. The building block is then gripped by the clamp jaws against either end of the slab, and the slab is rotated and oriented for attachment to the wall, while the longitudinal direction is oriented horizontal.

In one embodiment, each of the clamp jaws comprises a supporting portion for abutting the second side of the building block and a clamp portion for clamping on the edge.

When a building block is pushed with its glue against the vertical surface of the wall by moving the clamp jaws with the building block towards the wall, the foremost end of the clamp portion is inserted between adjacent building blocks and, thus, defines a minimum distance in between adjacent building blocks when one building block is mounted beside another.

In one embodiment, the construction robot comprises a detection unit arranged and configured to detect a horizontal distance between two predefined positions of building blocks to be arranged on the same vertical level, wherein the construction robot is configured to position a building block in a position, in which the detected distance corresponds to a predefined value or within a predefined range.

In one embodiment, the construction robot is configured to compensate for the size variation of the length of the building blocks. In one embodiment, the construction robot comprises a detection unit arranged and configured to detect the distance between the rightmost portion of a building block and the rightmost of the adjacent building block. Hereby, the construction robot can automatically vary the width between adjacent building blocks in order to compensate for the size variation of the length of the building blocks. If a building block is larger than the average, the construction robot can compensate for the size variation of the length of the building blocks by decreasing the width between adjacent building blocks. If a building block is shorter than the average, the construction robot can compensate for the size variation of the length of the building blocks by increasing the width between adjacent building blocks.

In one embodiment, the detection unit is arranged and configured to detect the distance between the left most portion of a building block and the left most portion of the adjacent building block.

In one embodiment, the construction robot comprises a detection unit arranged and configured to detect the distance 2W+2L between the rightmost portion of a first building block and the rightmost of a third building block arranged next to a second building block placed next to the first building block.

In one embodiment, the construction robot comprises a detection unit arranged and configured to detect the distance 2W+3L between the leftmost portion of a first building block and the rightmost of a third building block arranged next to a second building block placed next to the first building block.

In one embodiment, the construction robot is configured to position the adjacent building block in such a position that the distance W+L between the rightmost portion of a building block and the rightmost of the adjacent building block is within a fixed range. In one embodiment, the range is 237-243 mm. In one embodiment, the range is 238-242 mm. In one embodiment, the range is 239-241 mm.

In one embodiment, the construction robot is configured to position the adjacent building block in such a position that the distance W+L between the rightmost portion of a building block and the rightmost of the adjacent building block is fixed. In one embodiment, the fixed distance is 240 mm.

In on embodiment, the construction robot is configured to position the third building block in such a position that the distance 2W+2L between the rightmost portion of a first building block and the rightmost of a third building block arranged next to a second building block placed next to the first building block is fixed or within a predefined fixed range. In one embodiment, the fixed range is 477-483 mm. In one embodiment, the fixed range is 478-482 mm. In one embodiment, the fixed range is 479-481 mm. In one embodiment, the fixed distance is 480 mm.

In on embodiment, the construction robot is configured to position the third building block in such a position that the distance 2W+3L between the leftmost portion of a first building block and the rightmost of a third building block arranged next to a second building block placed next to the first building block is fixed or within a predefined fixed range.

In one embodiment, the detection unit is a sensor. The sensor may be optical or mechanical.

In some practical embodiments, each of the clamp jaws comprises a supporting portion for abutting the second side of the building block and a clamp portion for clamping on the edge. At a foremost end of the clamp portion, it comprises a rounded part. When a building block is pushed with its glue against the vertical surface of the wall by moving the clamp jaws with the building block towards the wall, the rounded foremost end is of the clamp portion is inserted between adjacent building blocks and, thus, defines a minimum distance in between adjacent building blocks when one building block is mounted beside another.

The group of components, as described above, are suspended by a frame of the construction robot. The frame comprises at least one vertical beam and at least one horizontal beam, which are suspending the group.

Motors, typically mounted on the beams, are used for moving the group horizontally and vertically along the wall and for moving the gripper towards the wall when attaching the building block to the wall. The motors are controlled by a controller that is programmed with computer instructions for sequentially attaching one building block after the other against the wall at predetermined locations.

For example, a horizontal beam is provided stationary in parallel to the wall and guides the group of components along the wall in a horizontal direction. A vertical beam is travelling together with the group of components and used for adjusting the height of the gripper when attaching the building block against the wall. Optionally, the construction robot comprises more than one horizontal beam and/or more than one vertical beam.

It is an advantage that the construction robot comprises a contact flange that is movable in a direction towards the wall independently of the gripper station for contact with the wall prior to the attachment of the building block onto the wall. In operation, the contact flange is moved into contact with the wall firstly, and only then the clamp jaws with the building block are moved towards and against the wall. The contact flange is used for securing mechanical stability between the robot and the wall and for correspondingly increasing attachment precision.

In order to safeguard high precision, a mechanical link is provided between the gripper station and the contact flange, where the link defines the movement of the clamp jaws towards the wall relatively to the contact flange. When the contact flange has contact with the wall and stabilizes the attachment procedure, the clamp jaws are forced into a certain location, defined by the position of the contact flange against the wall. The mechanical link comprises a guide roller as part of the gripper station and a slot as part of the contact flange. The guide roller is taken up inside the slot during advance of the clamp jaws towards the wall and thereby precisely guided in its motion.

For example, the vertical surface of the wall is provided with a profiled facade comprising equidistant horizontal ledges with horizontal trenches in between the ledges for take up of the building blocks inside the trenches. This is advantageous in that the trenches define precise vertical positions of the building blocks inside the trenches with the glue against the profiled facade inside the trench. Additionally, the building block can rest on the ledge as a support.

However, such profiled facade requires precise work by the robot, as otherwise there is a risk of the building blocks being pressed against the front face of the ledges and not positioned inside the trenches, which would lead to a lack of proper fastening of the building blocks onto the wall. Accordingly, as an option, in order to safeguard precise attachment, the contact flange comprises a notch for taking up a horizontal ledge inside such notch. In operation, the contact flange is moved into contact with the wall such that it takes up a ledge inside the notch and thereby secures a well-defined vertical position of the contact flange relatively to the ledge and the trench. Only then, the clamp jaws with the building block are moved towards and against the wall for positioning the building block precisely inside the trench with the glue against the profiled facade inside the trench and, optionally, with the building block resting on the horizontal ledge as a support against sliding downwards on the facade.

In one embodiment, the method comprises the step of:
- detecting a horizontal distance (W+L) between two predefined positions of building blocks to be arranged on the same vertical level and
- positioning a building block in a position, in which the detected distance (W+L) corresponds to a predefined value or within a predefined range.

In one embodiment, the method comprises the step of detecting the distance between the left most portion of a building block and the left most portion of the adjacent building block.

In one embodiment, the method comprises the step of detecting the distance 2W+2L between the rightmost portion of a first building block and the rightmost of a third building block arranged next to a second building block placed next to the first building block.

In one embodiment, the method comprises the step of detecting the distance 2W+3L between the leftmost portion of a first building block and the rightmost of a third building block arranged next to a second building block placed next to the first building block.

In one embodiment, the method comprises the step of positioning the adjacent building block in such a position that the distance W+L between the rightmost portion of a building block and the rightmost of the adjacent building block is within a fixed range. In one embodiment, the range is 237-243 mm. In one embodiment, the range is 238-242 mm. In one embodiment, the range is 239-241 mm.

In one embodiment, the method comprises the step of positioning the adjacent building block in such a position that the distance W+L between the rightmost portion of a building block and the rightmost of the adjacent building block is fixed. In one embodiment, the fixed distance is 240 mm.

In one embodiment, the method comprises the step of positioning the third building block in such a position that the distance 2W+2L between the rightmost portion of a first building block and the rightmost of a third building block arranged next to a second building block placed next to the first building block is fixed or within a predefined fixed range. In one embodiment, the fixed range is 477-483 mm. In one embodiment, the fixed range is 478-482 mm. In one embodiment, the fixed range is 479-481 mm. In one embodiment, the fixed distance is 480 mm.

In one embodiment, the method comprises the step of positioning the third building block in such a position that the distance 2W+3L between the leftmost portion of a first building block and the rightmost of a third building block arranged next to a second building block placed next to the first building block is fixed or within a predefined fixed range.

In order to provide precise adjustment of the components relatively to the wall, cameras are optionally used with corresponding image analysis. Alternatively, or in addition, laser scanners are used for measuring and finding the correct positions for the building blocks. Signals in digital form are analysed and the result used by the controller for the positioning of the components by the motors.

### SHORT DESCRIPTION OF THE DRAWINGS

The invention will be explained in more detail with reference to the drawing, where
FIG. 1A is a perspective view of some main components of a construction robot;
FIG. 1B is a top perspective view;
FIG. 1C shows the clamp jaws 22 in greater detail;
FIG. 1D is a top perspective view of the gripper station;
FIG. 1E is a rear view of the gripper station;
FIG. 2A is a principle sketch of glue on the building block on the conveyor;
FIG. 2B is a principle sketch of the building block against the wall;
FIG. 3A illustrates the building block prior to contact with a profiled facade;
FIG. 3B illustrates the building block on the profiled facade;
FIG. 4 illustrates dimensioning of attachment of the building blocks;
FIG. 5 illustrates distancing of building blocks from the profiled facade;
FIG. 6A shows building block in the first magazine;
FIG. 6B shows glue application onto a building block on the conveyor;
FIG. 6C shows transport of the building block onto support pins;
FIG. 6D shows support of the building block on support arms;
FIG. 6E shows jaws clamping the building block;
FIG. 6F shows the clamp jaw in greater detail;
FIG. 6G illustrates the stage of moving of the building block;
FIG. 6H illustrates tilting of the building block;
FIG. 6J illustrates the contact block in greater detail.

### DETAILED DESCRIPTION / PREFERRED EMBODIMENT

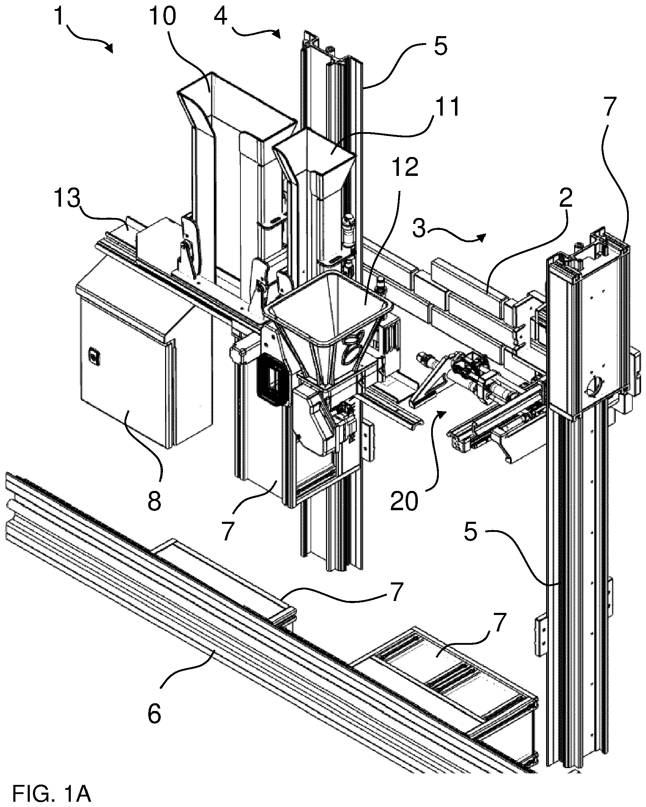

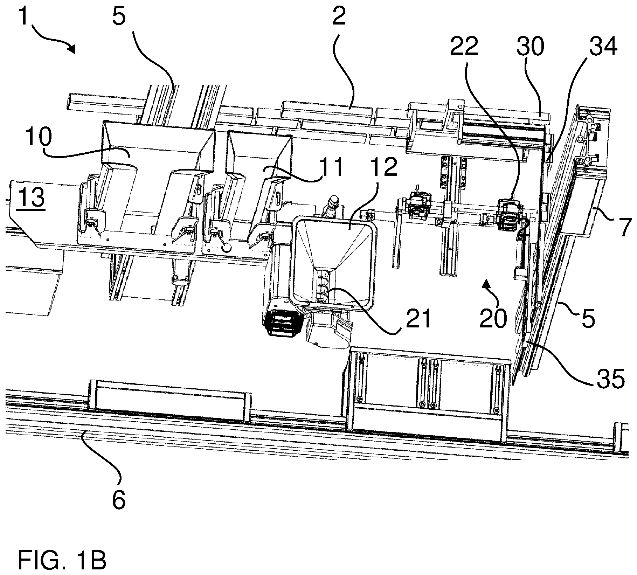

FIG. 1A is a perspective view of some main components of a construction robot 1 for placing building blocks 2, such as bricks or tiles, against a vertical wall 3. FIG. 1B is a different view of the same construction robot 1.

The robot 1 comprises a general frame 4 of profiles, such as vertical beams 5 and horizontal beams 6, which in common carry components of the construction robot 1 and along which such various components are moved. Movements of these components is accomplished by motors 7 with internal decoders for measuring distances of movements and which are functionally connected to the controller 8.

The controller 8 comprises a computer that is programmed for moving the various components of the construction robot 1 to correct positions and orientations in dependence on pre-programmed parameters, including wall structure, size of building blocks, and attachment pattern on the wall for the building blocks 2.

Building blocks 1, such as bricks or tiles, are stored in magazines, for example a first magazine 10 for a first type of building blocks, such as flat bricks or tiles, and a second magazine 11 for a second type of building blocks, optionally for half sized bricks.

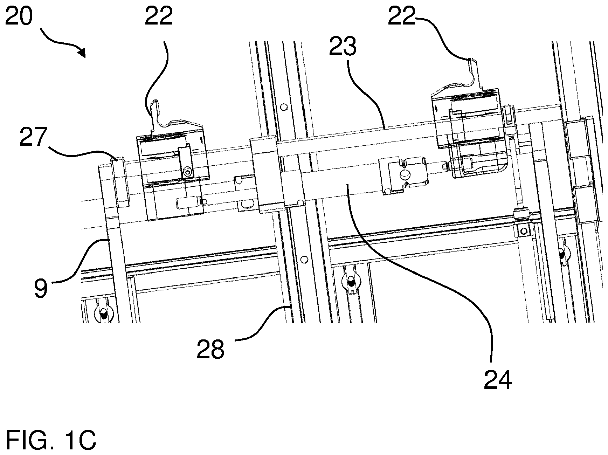

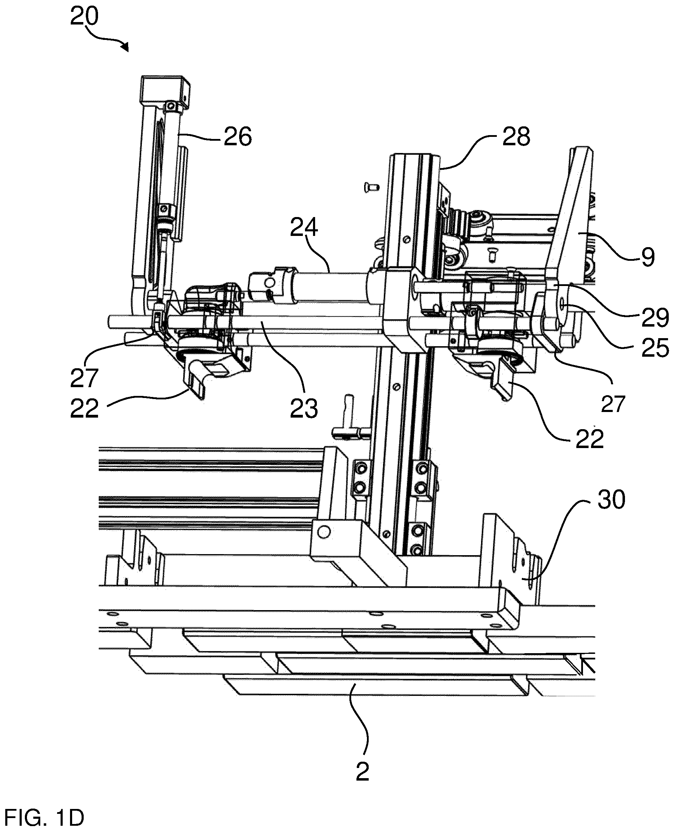

For fastening the building blocks 2 onto the wall 3, glue is provided from a glue container 12. In operation, a building block 2 is provided from the first magazine 10 or the second magazine 11 and placed flat onto a conveyor 13 with an attachment side upwards, the attachment side being that side of the building block 2 which will subsequently be pressed against the vertical wall 3. Glue is provided from the glue container 12 by means of a dispenser 21, best seen in FIG. 1B, and laid on top of the attachment side of the building block 2. Then, the building block 2 is moved on the conveyor 13 to the gripper station 20 where it is gripped by jaws 22, which are shown on FIG. 1B but best illustrates on FIG. 1C and 1D. While the building block 2 is held between the jaws 22, an actuator 26 is used to move the jaws 22 and the building block 2 such that its attachment side is turned to vertical orientation and subsequently moved towards the wall 3 and pressed against the wall 3 for attachment of the attachment side 2A against the wall 3 by means of the glue.

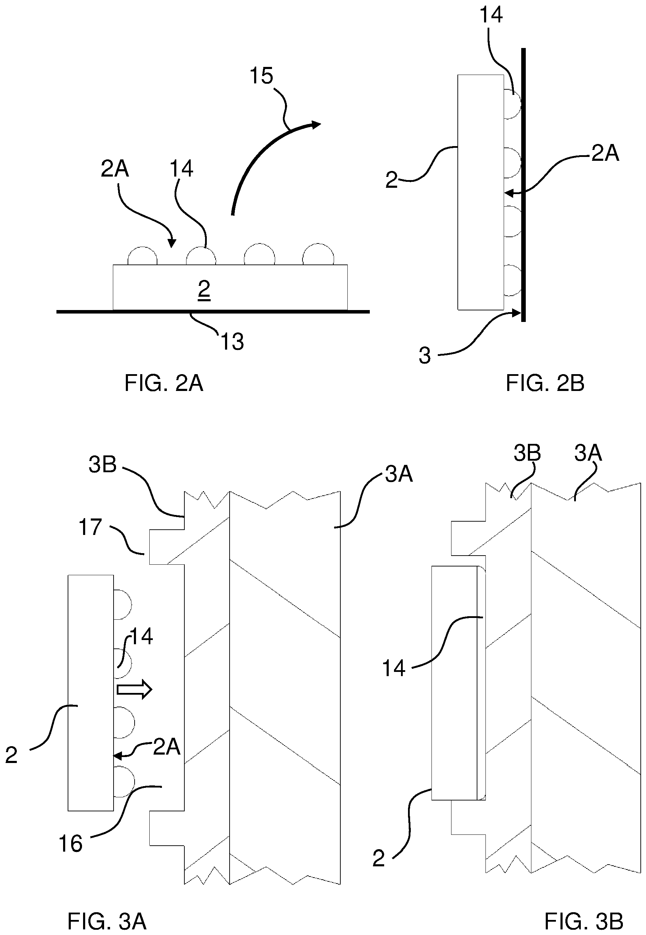

Stylistically, the process is illustrated in FIG. 2A and 2B, where the building block 2 is placed on the conveyor 13, and glue 14 is dispensed onto its attachment side 2A, which is oriented upwards during the process when glue 14 is applied to the attachment side 2A. Subsequently, the building block 2 is moved from the conveyor 13 to the gripper station 20, and tilted, which is illustrated by arrow 15, so that the attachment side 2A is oriented vertically and parallel to the wall 3, and the glue 14 is brought into contact with the wall 3, and the building block 2 pressed against the wall 3.

In some embodiments, the vertical wall 3 has a vertical basic wall structure 3A, which is covered by a profiled facade 3B. The profiled facade 3B is built up of horizontal ledges 17 and trenches 16 in between the ledges 17. The building blocks 2 are dimensioned to fit inside the trenches 16 and are aligned with the ledges 17 when attached to the wall 3. The ledges 17 are useful not only in aligning the building blocks 2 but also in that they support the building blocks 2 against sliding downwards, as illustrated in FIG. 3B.

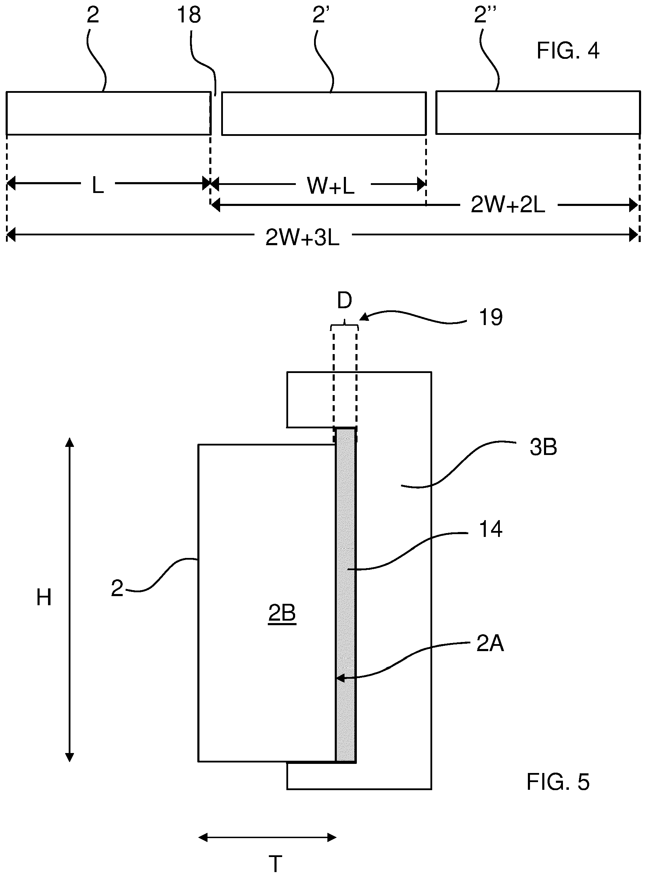

FIG. 4 illustrates a typical arrangement of the building blocks 2, 2', 2", where the building blocks 2, 2', 2" have a length L and have an interspace 18 of width W between each other, for example a width in the range of 0.5 to 2 cm. When placing building blocks 2, for example thin slabs, against the wall 3 in rows one above the other, it resembles a wall made of bricks, even when only thin slabs are glued against the wall 3.

In one embodiment, the construction robot is configured to compensate for the size variation of the length L of the building blocks 2, 2'. In this embodiment, the construction robot comprises a detection unit arranged and configured to detect the distance W+L between the rightmost portion of a building block and the rightmost of the adjacent building block 2'.

In one embodiment, the construction robot comprises a detection unit arranged and configured to detect the distance 2W+2L between the rightmost portion of a first building block 2 and the rightmost of a third building block 2" arranged next to a second building block 2' placed next to the first building block 2.

In one embodiment, the construction robot comprises a detection unit arranged and configured to detect the distance 2W+3L between the leftmost portion of a first building block 2 and the rightmost of a third building block 2" arranged next to a second building block 2' placed next to the first building block 2.

In on embodiment, the construction robot is configured to position the adjacent building block 2' in such a position that the distance W+L between the rightmost portion of a building block and the rightmost of the adjacent building block 2' is within a fixed range. In one embodiment, the range is 237-243 mm. In one embodiment, the range is 238-242 mm. In one embodiment, the range is 239-241 mm.

In one embodiment, the construction robot is configured to position the adjacent building block 2' in such a position that the distance W+L between the rightmost portion of a building block and the rightmost of the adjacent building block 2' is fixed. In one embodiment, the fixed distance is 240 mm.

In on embodiment, the construction robot is configured to position the third building block 2" in such a position that the distance 2W+2L between the rightmost portion of a first building block 2 and the rightmost of a third building block 2" arranged next to a second building block 2' placed next to the first building block 2 is fixed or within a predefined fixed range. In one embodiment, the fixed range is 477-483 mm. In one embodiment, the fixed range is 478-482 mm. In one embodiment, the fixed range is 479-481 mm. In one embodiment, the fixed distance is 480 mm.

In on embodiment, the construction robot is configured to position the third building block 2" in such a position that the distance 2W+3L between the leftmost portion of a first building block 2 and the rightmost of a third building block 2" arranged next to a second building block 2' placed next to the first building block 2 is fixed or within a predefined fixed range.

In one embodiment, the detection unit is a sensor. The sensor may be optical or mechanical.

FIG. 5 illustrates an example of a building block 2 as seen from an end view with glue 14 on its attachment side 2A. Once, attached to the profiled facade 3B, the attachment side 2A of the building block 2 will be spaced a distance 19 of D from the wall. In order to safeguard that the distance D is constant among attached building blocks 2, the gripper station 20 is potentially provided with a mechanical distance holder (not shown), which is configured for adjusting the relative position of the building block 2 to such certain predetermined distance D from the profiled facade 3B, or equivalently from a plane wall 3. Alternatively, the distance D is measured automatically by the construction robot 1, optically or mechanically, and the movement of the jaws 22 correspondingly adjusted to move and press the building block 2 to the correct position and distance D to the wall. For example, the distance D is in the range of 1 to 3 mm.

Examples of dimensions for building blocks 2 in the form of elongate slabs, as illustrated, are lengths L in the range of 15 to 50 cm, heights H in the range of 3 to 12 cm, and a thickness T of the slab in the range of 1 to 5 cm.

FIG. 1C and 1D, from opposite perspectives, illustrate the gripper station 20, and in particular the jaws 22, in greater detail. Two jaws 22 are mounted translational on translation rails 23, which in operation are oriented parallel to the wall 3, and on which the jaws 22 are moved by a translation actuator system 24. The translation rails 23 and the jaws 22 are mounted on flanges 27, which are arranged rotational on a rotation axle 25, best seen on FIG. 1D, and rotated by a linear actuator 26 that is connected to one of the flanges 27 eccentrically relatively to the rotation axle 25, which is suspended in a cantilever 9, so that extension or contraction of the linear actuator 26 causes the flanges 27 to rotate about the axle 25. The rotation of the flanges 27 also rotates the translation rails 23 about the axle 25, the rotation being delimited by a groove that functions as an end stop 29 in the cantilever 9. It is observed that the flanges 27 are rotational only on the axle 25, and thus rotational in only one rotational dimension.

As an alternative to the eccentric linear actuator 26, a rotational actuator can be used, which is not illustrated, however.

The jaws 22 are arranged to grab against opposite edges, such as against either end, of the building block 2. For example, the building block 2 is a flat elongate slab that is to be oriented and mounted such that the side with the largest area is glued onto the wall. For this, the jaws 22 grab against the ends of the building block 2 that is shaped as a flat slab and move the building block 2 towards the wall 3 while it is held between the jaws 22. The arrangement of the translation rails 23 and the jaws 22 are mounted on a translation profile 28 which is lateral to the wall 3.

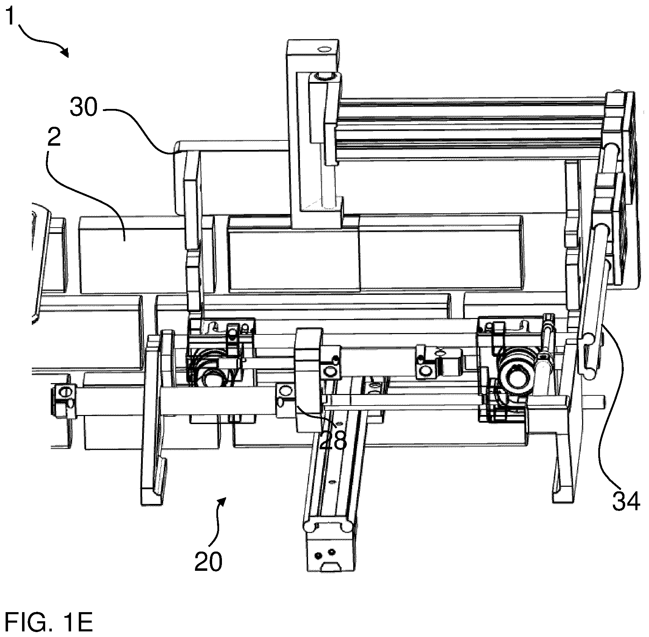

For keeping a precise distance to the wall 3, for example the profiles facade, and for securing a correct position, the construction robot 1 comprises a contact flange 30, best illustrated in FIG. 1D and 1E, which is moved into contact with the wall 3 and secures a correct positioning. The contact flange 30 is mounted on a contact flange arm 34, as illustrated in FIG. 1B, which is connected to one of the vertical beams 5 and moved in vertical orientation by a corresponding motor 7, for example by using a spindle or a wire arrangement inside the vertical beam 5. The gripper station 20 is also mounted on an arm 35 connected to the beam 5 for vertical movement by the motor 7.

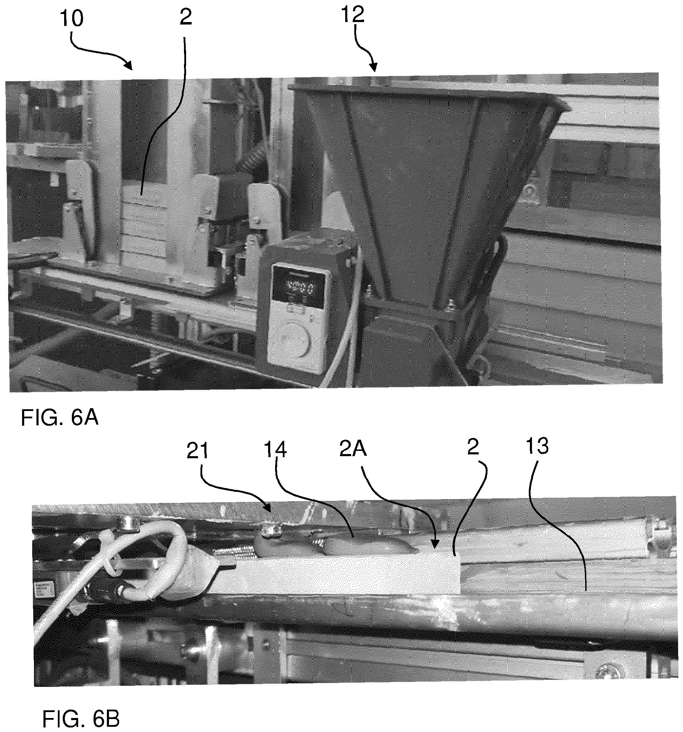

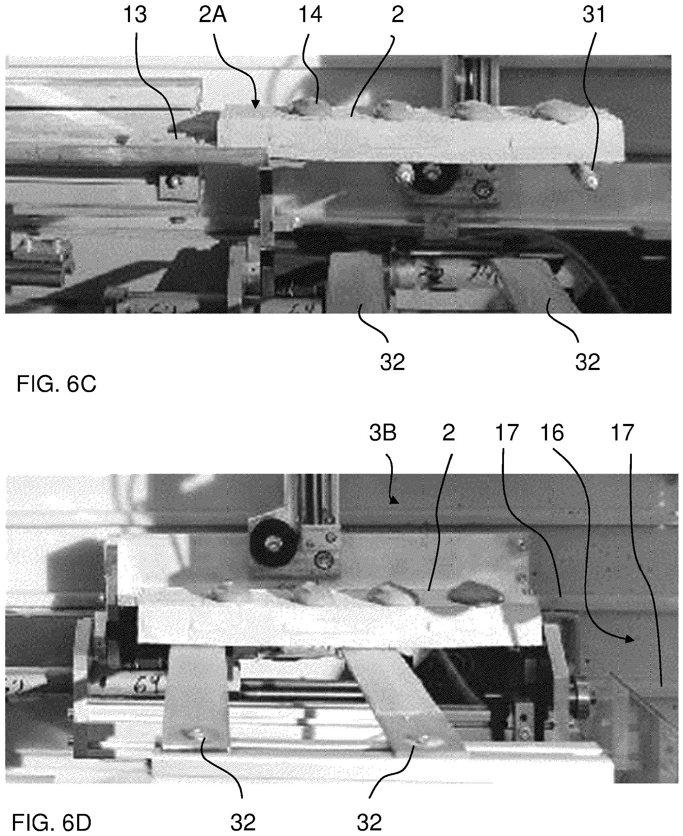

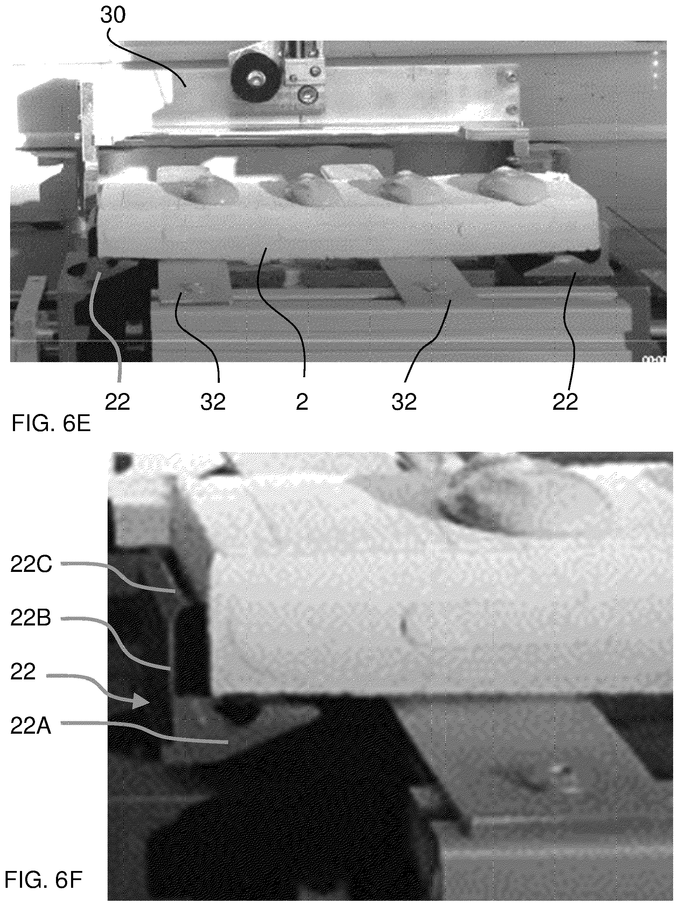

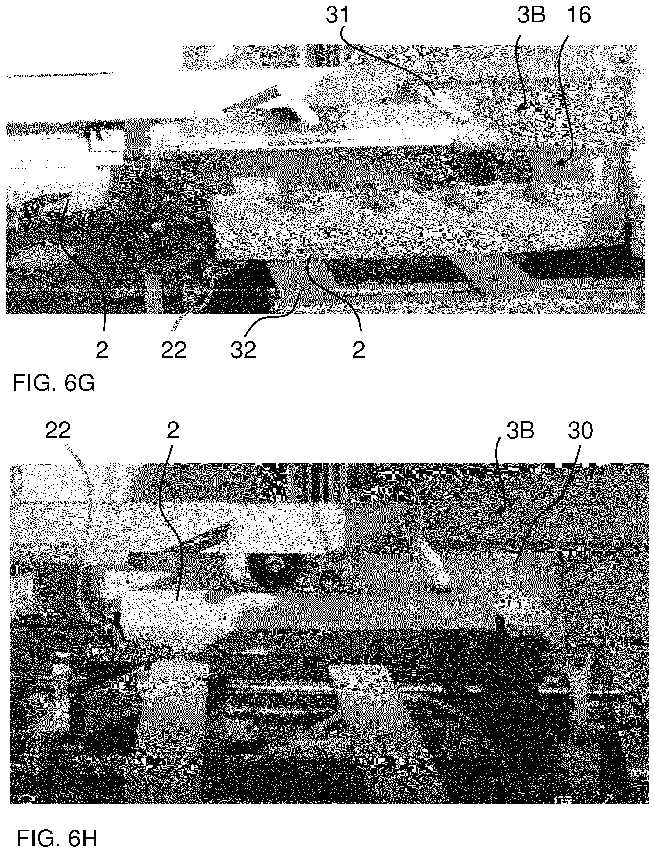

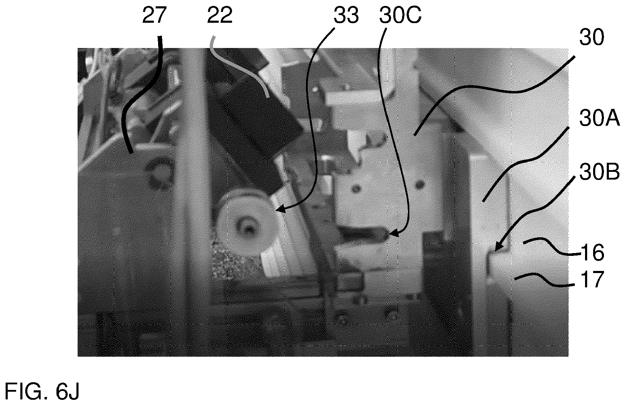

The sequence of the automated mounting procedure by the construction robot is illustrated in FIG. 6.

FIG. 6A shows an image of the first magazine 10 of building blocks 2, which in the image are ceramic slabs with a flat attachment side, and with a thickness substantially smaller than the height and length of the slab.

FIG. 6B illustrates a process stage where a building block 2 in the form of a slab is positioned on the conveyor 13 with its attachment side 2A oriented upwards, and where glue 29 is dispensed by the dispenser 21 onto the attachment side 2A.

FIG. 6C illustrates a stage in the sequence where the building block 2 has been moved along the conveyor 13 to the end thereof and further onto two horizontal support pins 31 that are oriented lateral to the wall, advantageously rotational pins for easy sliding of the building block 2 onto the pins 31. The pins 31 support the building block 2 when it leaves the conveyor 13. A pair of lifting arms 32 are configured to move upwards and lift the building block 2 from the pins 31.

FIG. 6D illustrates the stage where the lifting arms 32 have moved upwards and lifted the building block 2 from the pins 31 so that it now rests on the lifting arms 32. The profiled facade 3B is clearly visible with the ledges 17 and the trenches 16 in between, where the building blocks 2 shall be attached.

FIG. 6E illustrates a stage where the jaws 22 have grabbed the building block 2 at its ends, which is then moved a distance away from the wall, while still on the lifting arms 32, in order to make room for driving the pins 31 up and out of the way for the building block 2, which is illustrated in FIG. 6G.

FIG. 6F illustrates one of the jaws 22 in greater detail. The jaw 22 comprises a supporting portion 22A and a clamp portion 22B. The clamp portion 22B has at its foremost end a rounded part 22C, which is used as a lateral distance adjustment tool in that the rounded part 22C is inserted between adjacent building blocks 2. With reference to FIG. 4, the clamp portion 22B with the rounded part 22C has a width in the order of the distance 18 of size Wand ensures a constant distance between adjacent building blocks 2.

FIG. 6G illustrates the stage where the building block on the jaws 22 has been moved to the right to the position where the building block 2 is to be placed against the profiled facade 3B in extension of another building block 2 which is already glued to the wall. Also illustrated is the upwards movement of the pins 31 in order for the jaws 22 and the building block 2 to have unhindered access to the trench 16 in the profiled facade 3B.

FIG. 6H illustrates the stage where the jaws 22 are rotating around a horizontal axle, which is parallel with the profiled facade 3B, see also position 25 in FIG. 1C, in order to orient the building block 2 towards the profiled facade 3B. The contact flange 30 is used for correct positioning of the building block 2 on the profiled façade 3B.

FIG. 6J is a side view of the contact block 30. It comprises an edge portion 30A that protrudes into the trench 16 of the profiled facade 3B, and a notch 30B for taking up ledge 17 in order to ensure a proper steering by the jaws 22 and precise positioning of the building block 2 onto the profiled facade 3B. Also visible is a jaw 22 in the process of retraction from the contact block 30, the retraction combining a translation of the rotation flange 27 in a linear direction away from the contact block 30 and a subsequent rotation of the rotation flange 27 together with the jaws 22 about the rotation axle. The rotation flange 27 that holds the jaws 22 is provided with a guide roller 33, and the contact block 30 is provided with a cooperating slot 30C that is taking up the guide roller 33 in order to provide a precise and stable steering of the building block 2 by the jaws 22 against the profiled facade 3B. The cooperation of the guide roller 33 and the slot 30C as well as the cooperation between the notch 30B and the ledge 17 ensures precise placement of the building block 2 relatively to the horizontal trench 16 in the profiled facade 3B.

The construction robot 1 comprises computer program instructions to automatically move the arrangement of magazine 10, 11, the glue container 12, the dispenser 21, the conveyor 13, and the gripper station 20 along the wall 3 and programmed to automatically attach the building blocks 2 against the wall at pre-calculated positions. In order to control the correct positioning, the motors 7 comprise decoders so that the position of each component of the construction robot 1 is precisely known by the controller 8. In order to assist in correct positioning, laser scanners or cameras are advantageously used for the control of the position. Feedback loops on the basis of the scans or photo images of the wall are advantageously employed for high precision.

### Reference numbers

1 - construction robot
2, 2', 2" - building block, for example brick or tile
2A - attachment side of the building block 2
2B - edges of the building block 2
3 - vertical wall
3A - basic wall structure
3B - profiled facade
4 - profile frame
5 - vertical beam
6 - horizontal beam
7 - motor
8 - controller
9 - cantilever
10 - first magazine for building block 2
11 - second magazine for building block 2
12 - glue container
13 - conveyor
14 - glue
15 - rotational movement
16 - trench of profiled facade 3B
17 - ledge of profiled facade 3B
18 - interspace (width W) between adjacent building blocks 2
19 - distance D from wall 3
20 - gripper station
21 - glue dispenser
22 - clamp jaw
22A - supporting portion of the clamp jaw
22B - clamp portion of the clamp jaw
22C -part at foremost end of clamp portion
23 - translation rail for clamp jaws 22
24 - actuator system for clamp jaws 22
25 - rotation axle for rotation flange 27
26 - linear actuator for rotation of rotation flange 27 on rotation axle 25
27 - rotation flange
28 - translation profile for gripper station 20
29 - end stop for rotational movement
30 - contact flange
30A - edge part extending into trench 16 of profiles facade 3B
30B - notch in contact flange 30 for take up of ledge 17 of profiled facade 3B
30C - slot for guide roller 33
31 - pins at gripper station 20 for supporting building block
32 - support arms at gripper station 20 for building block
33 - guide roller on rotation flange 27
34 - support arm for contact flange 30
35 - support arm for gripper station 20

## Claims

1. A construction robot (1) for attaching building blocks (2) against a vertical surface of a vertical wall (3),
wherein the robot (1) comprises a group of components, the group of components including
- a magazine (10) of building blocks (2), the building blocks (2) being defined by an attachment side for attachment to the vertical wall (3), an opposite second side which after attachment faces away from the wall (3), and edges (2B) surrounding the attachment side and the second side;
- a glue container (12);
- a glue dispenser (21) configured for automatically dispensing glue (14) from the glue container (12) onto the attachment side (2A) while it is facing upwards;
- a conveyor (13) for automatically receiving a building block (2) from the magazine (10) and for moving the building block from the magazine to the glue dispenser (21) in an orientation where the attachment side (2A) of the building block (2) is facing upwards for receiving glue by the glue dispenser (21); **characterised in that** the construction robot (1) further comprises:
- a gripper station (20) comprising a rotationally suspended gripper and arranged for receiving the building block (2) from the conveyor (13) and for gripping the building block (2) by the gripper, wherein the gripper is configured for holding the building block (2) during a rotation of the building block (2) by the gripper station (20) until the attachment side (2A) is vertical and facing the vertical surface of the vertical wall (3); and wherein the gripper station (20) is configured for moving the attachment side (2A) towards the wall (3) and with the glue (14) into contact with the wall (3) while the building block (2) is held by the gripper;
wherein the robot (1) also comprises a frame (4) comprising a vertical beam (5) and a horizontal beam (6) for suspending the group and motors (7) for moving the group horizontally and vertically along the wall (3) and for moving the gripper (22) towards the wall (3) for attachment of the building block (2) onto the wall (3), wherein the motors (7) are controlled by a controller (8) programmed with computer instructions for sequentially attaching one building block (2) after the other against the wall (3) at predetermined locations;
**wherein** the gripper comprises clamp jaws (22) configured for engaging with opposite edges (2B) of the building block (2) and holding the building block (2) clamped between the clamp jaws (22) by a force against the edges (2B); wherein the gripper station (20) is configured for receiving the building block (2) from the conveyor (13) in a first orientation and for clamping the edges (2B) by the clamp jaws (22), and subsequently, while clamping the edges (2B), turning the clamp jaws (22) together with the building block (2) from the received first orientation to a second orientation where the attachment side (2A) is vertical and facing the wall (3), wherein the construction robot comprises a contact flange (30) that is movable in a direction towards the wall (3) independently of the gripper station (20) for contact with the wall (3) prior to a movement of the clamp jaws (2) with the building block (2) towards and against the wall (3), wherein a mechanical link (30C, 33) between the gripper station (20) and the contact flange (30) defines the movement of the clamp jaws (2) towards the wall (3) relatively to the contact flange (30), wherein the mechanical link comprises a guide roller (33) as part of the gripper station (20) and a slot (30C) as part of the contact flange (30) for taking up the guide roller (33) inside the slot (30C) during advance of the clamp jaws (22) towards the wall (3).

2. Construction robot (1) according to claim 1, wherein the construction robot (1) comprises a detection unit arranged and configured to detect a horizontal distance (W+L) between two predefined positions of building blocks (2, 2', 2") to be arranged on the same vertical level, wherein the construction robot (1) is configured to position a building block (2, 2', 2") in a position, in which the detected distance (W+L) corresponds to a predefined value or within a predefined range.

3. Construction robot (1) according to claim 2, wherein the detection unit is arranged and configured to detect the distance between the left most portion of a building block (2) and the left most portion of the adjacent building block (2').

4. Construction robot (1) according to one of the preceding claims, wherein the clamp jaws (22) are mounted on a rotational axle (25) and configured for rotation only in one rotational dimension for rotating the clamp jaws (22) together with the building block (2) from the first orientation to the second orientation where the attachment side (2A) is oriented vertical for attachment to the vertical surface of the vertical wall (3).

5. Construction robot according to one of the preceding claims, wherein the attachment side (2A) in the first orientation is upwards, and the gripper station (20) is configured for receiving the building block (2) from the conveyor (13) with the attachment side (2A) oriented upwards, and for clamping the edges (2B) by the clamp jaws (22) while the attachment side (2A) is still oriented upwards.

6. Construction robot according to one of the preceding claims, wherein each of the clamp jaws (22) comprises a supporting portion (22A) for abutting the second side of the building block (2) and a clamp portion (22B) for clamping on the edge, wherein the clamp portion (22B) at a foremost end of the clamp portion (22) is configured for insertion between adjacent building blocks (2) and for defining a minimum distance in between the adjacent building blocks (2) when moving the clamp jaws (22) with the building block (2) towards the wall (3) for mounting the building block (2) beside another.

7. Method of automatic attachment of building blocks against a vertical surface of a vertical wall (3);
wherein the building blocks (2) are defined by an attachment side for attachment to the vertical wall (3), an opposite second side which after attachment faces away from the wall (3) and edges (2B) surrounding the attachment side and the second side;
wherein the method comprises providing a construction robot according to any preceding claim and with the robot automatically performing the following automated sequence of stages:
- on a conveyor (13) receiving a building block (2) from a magazine (10) of and moving the building block (2) from the magazine (10) to a glue dispenser (21) in an orientation where the attachment side (2A) of the building block (2) is facing upwards;
- by the glue dispenser (21) dispensing glue (14) from a glue container (12) onto the attachment side (2A) while it is facing upwards;
- by a gripper station (20), which comprises a rotationally suspended gripper, receiving the building block (2) from the conveyor (13) and gripping the building block (2) by the gripper and holding the building block (2) during a rotation of the building block (2) by the gripper station (20) until the attachment side (2A) is vertical and facing the vertical surface of the vertical wall (3); and by the gripper station (20) moving the attachment side (2A) towards the wall (3) and bringing the glue (14) into contact with the wall (3) while the building block (2) is held by the gripper;
by a frame (4) comprising a vertical beam (5) and a horizontal beam (6) suspending the group, using motors (7) for moving the group horizontally and vertically along the wall (3) and moving the gripper (22) towards the wall (3) for attachment of the building block (2) onto the wall (3), wherein the motors (7) are controlled by a controller (8) programmed with computer instructions for sequentially attaching one building block (2) after the other against the wall (3) at predetermined locations;
wherein the gripper comprises clamp jaws (22) engaging with opposites edges (2B) the building block (2) and holding the building block (2) clamped between the clamp jaws (22) by force against the edges (2B); wherein the gripper station (20) is receiving the building block (2) from the conveyor (13) in a first orientation and clamping the edges (2B) by the clamp jaws (22), and subsequently, while clamping the edges (2B), turning the clamp jaws (22) together with the building block (2) from the received first orientation to a second orientation where the attachment side (2A) is vertical and facing the wall (3), wherein the construction robot (1) comprises a contact flange (30) that is movable in a direction towards the wall (3), independently of the gripper station (20), for contact with the wall (3), and wherein the method comprises first moving the contact flange (30) into contact with the wall (3) and then moving the clamp jaws (2) with the building block (2) towards and against the wall (3), wherein a mechanical link (30C, 33) between the gripper station (20) and the contact flange (30) defines the movement of the clamp jaws (2) towards the wall (3) relatively to the contact flange (30), wherein the mechanical link comprises a guide roller (33) as part of the gripper station (20) and a slot (30C) as part of the contact flange (30), and wherein the method comprises taking up the guide roller (33) inside the slot (30C) during advance of the clamp jaws (22) towards the wall (3).

8. Method according to claim 7, wherein the clamp jaws (22) are mounted on a rotational axle (25) and configured for rotation only in one rotational dimension, and wherein the method comprises rotating the clamp jaws (22) together with the building block (2) on the rotational axle (25) from the first orientation to the second orientation.

9. Method according to claim 7 or 8, wherein the attachment side (2A) in the first orientation is upwards, and the gripper station (20) is receiving the building block (2) from the conveyor (13) with the attachment side (2A) oriented upwards and clamping the edges (2B) by the clamp jaws (22) while the attachment side (2A) is still oriented upwards.

10. Method according to one of the claims 7-9, wherein each of the clamp jaws (22) comprises a supporting portion (22A) for abutting the second side of the building block (2) and a clamp portion (22B) for clamping on the edge, wherein the clamp portion (22B) at a foremost end of the clamp portion (22) comprises a rounded part (22C), wherein the method comprises insertion of the foremost end between adjacent building blocks (2) for defining a minimum distance in between the adjacent building blocks (2) while moving the clamp jaws (22) with the building block (2) towards the wall (3) and mounting the building block (2) beside another.

11. Method according to any one of the claims 7-10, wherein the method comprises providing a profiled facade (3B) as part of the wall (3), the profiles facade comprising equidistant horizontal ledges (17) with trenches (16) in between for take up of the building blocks (2) in the trenches (16), wherein the contact flange (30) comprises a notch (30B) for take up of a horizontal ledge (17) in the notch (30B), and wherein the method further comprises moving the contact flange (30) onto the profiled facade (3B) and taking up a ledge (17) inside the notch (30B) for securing a position of the contact flange (30) relatively to the ledge (17) and the trench (16), and then moving the clamp jaws (22) with the building block (2) towards and against the profiled facade (3B) and positioning the building block (2) inside the trench (16) with the glue against the profiled facade (3b) inside the trench (16) and with the building block (2) resting on the ledge (17) as a support.

12. Method according to one of the claims 7-11, wherein the method comprises providing the building blocks as a slab that is elongate in a longitudinal direction of the slab and which comprises two ends, the two ends comprising the edges with the smallest areas, and wherein the method comprises transporting the elongate slab on the conveyor (13) in a transport direction, where the longitudinal direction is parallel to the transport direction, then gripping the building block (2) by the clamp jaws (22) against either end of the slab and orienting the slab for attachment to the wall, while the longitudinal direction is oriented horizontal.

13. Method according to one of the claims 7-12, wherein the method comprises the step of:
- detecting a horizontal distance (W+L) between two predefined positions of building blocks (2, 2', 2") to be arranged on the same vertical level and
- positioning a building block (2, 2', 2") in a position, in which the detected distance (W+L) corresponds to a predefined value or within a predefined range.

## Patentansprüche

1. Bauroboter (1) zum Anbringen von Bausteinen (2) an einer vertikalen Fläche einer vertikalen Wand (3),
wobei der Roboter (1) eine Gruppe von Komponenten umfasst, wobei die Gruppe von Komponenten Folgendes umfasst:
- ein Magazin (10) von Bausteinen (2), wobei die Bausteine (2) durch eine Befestigungsseite zur Befestigung an der vertikalen Wand (3), eine gegenüberliegende zweite Seite, die nach der Befestigung von der Wand (3) weg weist, und Kanten (2B), die die Befestigungsseite und die zweite Seite umgeben, definiert sind;
- einen Klebstoffbehälter (12);
- einen Klebstoffspender (21), der dafür konfiguriert ist, automatisch Klebstoff (14) aus dem Klebstoffbehälter (12) auf die Anbringungsseite (2A) abzugeben, während diese nach oben zeigt;
- einen Förderer (13) zum automatischen Aufnehmen eines Bausteins (2) aus dem Magazin (10) und zum Bewegen des Bausteins von dem Magazin zu dem Klebstoffspender (21) in einer Ausrichtung, in der die Befestigungsseite (2A) des Bausteins (2) nach oben zeigt, um Klebstoff durch den Klebstoffspender (21) aufzunehmen; **dadurch gekennzeichnet, dass** der Bauroboter (1) ferner Folgendes umfasst:
- eine Greiferstation (20), die einen drehbar aufgehängten Greifer umfasst und zum Aufnehmen des Bausteins (2) von der Fördereinrichtung (13) und zum Greifen des Bausteins (2) durch den Greifer angeordnet ist, wobei der Greifer zum Halten des Bausteins (2) während einer Drehung des Bausteins (2) durch die Greiferstation (20) konfiguriert ist, bis die Befestigungsseite (2A) vertikal ist und der vertikalen Oberfläche der vertikalen Wand (3) zugewandt ist; und wobei die Greiferstation (20) dafür konfiguriert ist, die Befestigungsseite (2A) in Richtung der Wand (3) und mit dem Klebstoff (14) in Kontakt mit der Wand (3) zu bewegen, während der Baustein (2) von dem Greifer gehalten wird;
wobei der Roboter (1) darüber hinaus einen Rahmen (4) umfasst, der einen vertikalen Träger (5) und einen horizontalen Träger (6) zum Aufhängen der Gruppe und Motoren (7) zum horizontalen und vertikalen Bewegen der Gruppe entlang der Wand (3) und zum Bewegen des Greifers (22) in Richtung der Wand (3) zum Anbringen des Bausteins (2) an der Wand (3) umfasst, wobei die Motoren (7) von einer Steuerung (8) gesteuert werden, die mit Computerbefehlen programmiert ist, um einen Baustein (2) nach dem anderen an vorbestimmten Stellen nacheinander an der Wand (3) anzubringen;
wobei der Greifer Klemmbacken (22) umfasst, die so konfiguriert sind, dass sie mit gegenüberliegenden Kanten (2B) des Bausteins (2) in Eingriff kommen und den Baustein (2) durch eine Kraft gegen die Kanten (2B) zwischen den Klemmbacken (22) festgeklemmt halten; wobei die Greiferstation (20) dafür konfiguriert ist, den Baustein (2) vom Förderer (13) in einer ersten Orientierung aufzunehmen und die Kanten (2B) durch die Klemmbacken (22) festzuklemmen, und anschließend, während sie die Kanten (2B) festklemmt, die Klemmbacken (22) zusammen mit dem Baustein (2) aus der aufgenommenen ersten Orientierung in eine zweite Orientierung zu drehen, in der die Befestigungsseite (2A) vertikal und der Wand (3) zugewandt ist, wobei der Bauroboter einen Kontaktflansch (30) aufweist, der unabhängig von der Greiferstation (20) in Richtung der Wand (3) bewegbar ist, um die Wand (3) vor einer Bewegung der Klemmbacken (2) mit dem Baustein (2) in Richtung und gegen die Wand (3) zu berühren, wobei eine mechanische Verbindung (30C, 33) zwischen der Greiferstation (20) und dem Kontaktflansch (30) die Bewegung der Klemmbacken (2) zur Wand (3) hin relativ zum Kontaktflansch (30) definiert, wobei die mechanische Verbindung eine Führungsrolle (33) als Teil der Greiferstation (20) und einen Schlitz (30C) als Teil des Kontaktflansches (30) zur Aufnahme der Führungsrolle (33) innerhalb des Schlitzes (30C) beim Vorschub der Klemmbacken (22) zur Wand (3) hin aufweist.

2. Bauroboter (1) nach Anspruch 1, wobei der Bauroboter (1) eine Erfassungseinheit umfasst, die angeordnet und dafür konfiguriert ist, einen horizontalen Abstand (W+L) zwischen zwei vordefinierten Positionen von Bausteinen (2, 2', 2") zu erfassen, die auf derselben vertikalen Ebene anzuordnen sind, wobei der Bauroboter (1) dafür konfiguriert ist, einen Baustein (2, 2', 2") in einer Position zu positionieren, in der der erfasste Abstand (W+L) einem vordefinierten Wert entspricht oder innerhalb eines vordefinierten Bereichs liegt.

3. Bauroboter (1) nach Anspruch 2, wobei die Erfassungseinheit so angeordnet und konfiguriert ist, dass sie den Abstand zwischen dem am weitesten links liegenden Abschnitt eines Bausteins (2) und dem am weitesten links liegenden Abschnitt des benachbarten Bausteins (2') erfasst.

4. Bauroboter (1) nach einem der vorhergehenden Ansprüche, wobei die Klemmbacken (22) auf einer Drehachse (25) montiert und für eine Drehung in nur einer Rotationsdimension dafür konfiguriert sind, die Klemmbacken (22) zusammen mit dem Baustein (2) von der ersten Orientierung in die zweite Orientierung zu drehen, wobei die Befestigungsseite (2A) für die Befestigung an der vertikalen Oberfläche der vertikalen Wand (3) vertikal ausgerichtet ist.

5. Bauroboter nach einem der vorhergehenden Ansprüche, wobei die Befestigungsseite (2A) in der ersten Ausrichtung nach oben gerichtet ist und die Greiferstation (20) dafür konfiguriert ist, den Baustein (2) mit der nach oben gerichteten Befestigungsseite (2A) von der Fördereinrichtung (13) zu übernehmen und die Kanten (2B) durch die Klemmbacken (22) einzuklemmen, während die Befestigungsseite (2A) noch nach oben gerichtet ist.

6. Bauroboter nach einem der vorhergehenden Ansprüche, wobei jede der Klemmbacken (22) einen Stützabschnitt (22A) zur Anlage an der zweiten Seite des Bausteins (2) und einen Klemmabschnitt (22B) zum Festklemmen an der Kante aufweist, wobei der Klemmbackenabschnitt (22B) an einem vorderen Ende des Klemmbackenabschnitts (22) zum Einsetzen zwischen benachbarte Bausteine (2) und zum Definieren eines Mindestabstands zwischen den benachbarten Bausteinen (2) konfiguriert ist, wenn die Klemmbacken (22) mit dem Baustein (2) zur Wand (3) bewegt werden, um den Baustein (2) neben einem anderen anzubringen.

7. Verfahren zur automatischen Befestigung von Bausteinen an einer senkrechten Fläche einer senkrechten Wand (3);
wobei die Bausteine (2) durch eine Befestigungsseite zur Befestigung an der vertikalen Wand (3), eine gegenüberliegende zweite Seite, die nach der Befestigung von der Wand (3) weg weist, und Kanten (2B), die die Befestigungsseite und die zweite Seite umgeben, definiert sind;
wobei das Verfahren das Bereitstellen eines Bauroboters nach einem der vorhergehenden Ansprüche umfasst, wobei der Roboter automatisch die folgende automatisierte Abfolge von Schritten durchführt:
- auf einem Förderer (13), Aufnehmen eines Bausteins (2) aus einem Magazin (10) und Bewegen des Bausteins (2) aus dem Magazin (10) zu einem Klebstoffspender (21) in einer Ausrichtung, bei der die Befestigungsseite (2A) des Bausteins (2) nach oben zeigt;
- durch den Leimspender (21), Abgeben von Leim (14) aus einem Leimbehälter (12) auf die Befestigungsseite (2A), während diese nach oben zeigt;
- durch eine Greiferstation (20), die einen drehbar aufgehängten Greifer umfasst, Empfangen des Bausteins (2) von dem Förderer (13) und Ergreifen des Bausteins (2) durch den Greifer und Halten des Bausteins (2) während einer Drehung des Bausteins (2) durch die Greiferstation (20), bis die Befestigungsseite (2A) vertikal und der vertikalen Oberfläche der vertikalen Wand (3) zugewandt ist; und durch die Greiferstation (20), Bewegen der Befestigungsseite (2A) in Richtung der Wand (3) und In-Kontakt-Bringen des Klebstoffs (14) mit der Wand (3), während der Baustein (2) von dem Greifer gehalten wird;
durch einen Rahmen (4), der einen vertikalen Träger (5) und einen horizontalen Träger (6), der die Gruppe aufhängt, umfasst, Verwenden von Motoren (7) zum horizontalen und vertikalen Bewegen der Gruppe entlang der Wand (3) und zum Bewegen des Greifers (22) in Richtung der Wand (3) zum Anbringen des Bausteins (2) an der Wand (3) umfasst, wobei die Motoren (7) von einer Steuerung (8) gesteuert werden, die mit Computerbefehlen programmiert ist, um einen Baustein (2) nach dem anderen an vorbestimmten Stellen nacheinander an der Wand (3) anzubringen;
wobei der Greifer Klemmbacken (22) umfasst, die mit gegenüberliegenden Kanten (2B) des Bausteins (2) in Eingriff kommen und den Baustein (2) durch eine Kraft gegen die Kanten (2B) zwischen den Klemmbacken (22) festgeklemmt halten; wobei die Greiferstation (20) den Baustein (2) vom Förderer (13) in einer ersten Orientierung aufnimmt und die Kanten (2B) durch die Klemmbacken (22) festklemmt, und anschließend, während sie die Kanten (2B) festklemmt, die Klemmbacken (22) zusammen mit dem Baustein (2) aus der aufgenommenen ersten Orientierung in eine zweite Orientierung dreht, in der die Befestigungsseite (2A) vertikal und der Wand (3) zugewandt ist, wobei der Bauroboter (1) einen Kontaktflansch (30) aufweist, der unabhängig von der Greiferstation (20) in Richtung der Wand (3) bewegbar ist, um die Wand (3) zu berühren, und wobei das Verfahren zunächst das Bewegen des Kontaktflansches (30) in Kontakt mit der Wand (3) und daraufhin das Bewegen der Klemmbacken (2) mit dem Baustein (2) in Richtung und gegen die Wand (3) umfasst, wobei eine mechanische Verbindung (30C, 33) zwischen der Greiferstation (20) und dem Kontaktflansch (30) die Bewegung der Klemmbacken (2) zur Wand (3) hin relativ zum Kontaktflansch (30) definiert, wobei die mechanische Verbindung eine Führungsrolle (33) als Teil der Greiferstation (20) und einen Schlitz (30C) als Teil des Kontaktflansches (30) umfasst, und wobei das Verfahren die Aufnahme der Führungsrolle (33) innerhalb des Schlitzes (30C) beim Vorschub der Klemmbacken (22) zur Wand (3) hin umfasst.

8. Verfahren nach Anspruch 7, wobei die Klemmbacken (22) auf einer Rotationsachse (25) gelagert und nur in einer Rotationsdimension drehbar gebildet sind, und wobei das Verfahren ein Drehen der Klemmbacken (22) zusammen mit dem Baustein (2) auf der Rotationsachse (25) von der ersten Ausrichtung in die zweite Ausrichtung umfasst.

9. Verfahren nach Anspruch 7 oder 8, wobei die Befestigungsseite (2A) in der ersten Ausrichtung nach oben gerichtet ist und die Greiferstation (20) den Baustein (2) mit der nach oben gerichteten Befestigungsseite (2A) von der Fördereinrichtung (13) übernimmt und die Kanten (2B) durch die Klemmbacken (22) einklemmt, während die Befestigungsseite (2A) noch nach oben gerichtet ist.

10. Verfahren nach einem der Ansprüche 7 bis 9, wobei jede der Klemmbacken (22) einen Stützabschnitt (22A) zur Anlage an der zweiten Seite des Bausteins (2) und einen Klemmabschnitt (22B) zum Festklemmen an der Kante aufweist, wobei der Klemmabschnitt (22B) an einem vorderen Ende des Klemmabschnitts (22) einen abgerundeten Teil (22C) aufweist, wobei das Verfahren das Einsetzen des vordersten Endes zwischen benachbarte Bausteine (2) umfasst, um einen Mindestabstand zwischen den benachbarten Bausteinen (2) zu definieren, während die Klemmbacken (22) mit dem Baustein (2) in Richtung der Wand (3) bewegt werden und der Baustein (2) neben einem anderen angebracht wird.

11. Verfahren nach einem der Ansprüche 7 bis 10, wobei das Verfahren das Bereitstellen einer profilierten Fassade (3B) als Teil der Wand (3) umfasst, wobei die profilierte Fassade äquidistante horizontale Leisten (17) mit Gräben (16) dazwischen zur Aufnahme der Bausteine (2) in den Gräben (16) umfasst, wobei der Kontaktflansch (30) eine Kerbe (30B) zur Aufnahme einer horizontalen Leiste (17) in der Kerbe (30B) umfasst, und wobei das Verfahren ferner das Bewegen des Kontaktflansches (30) auf die profilierte Fassade (3B) und das Aufnehmen einer Leiste (17) innerhalb der Kerbe (30B) zum Sichern einer Position des Kontaktflansches (30) relativ zu der Leiste (17) und dem Graben (16) umfasst, woraufhin die Klemmbacken (22) mit dem Baustein (2) in Richtung und gegen die profilierte Fassade (3B) bewegt werden und der Baustein (2) innerhalb des Grabens (16) mit dem Kleber gegen die profilierte Fassade (3b) innerhalb des Grabens (16) positioniert wird, wobei der Baustein (2) auf der Leiste (17) als Stütze ruht.

12. Verfahren nach einem der Ansprüche 7 bis 11, wobei das Verfahren das Bereitstellen der Bausteine als eine in einer Längsrichtung der Platte längliche Platte umfasst, die zwei Enden aufweist, wobei die beiden Enden die Kanten mit den kleinsten Flächen umfassen, und wobei das Verfahren das Transportieren der länglichen Platte auf dem Förderer (13) in einer Transportrichtung umfasst, wobei die Längsrichtung parallel zur Transportrichtung ist, woraufhin der Baustein (2) durch die Klemmbacken (22) gegen jedes Ende der Platte gegriffen und die Platte zur Befestigung an der Wand ausgerichtet wird, während die Längsrichtung horizontal ausgerichtet ist.

13. Verfahren nach einem der Ansprüche 7 bis 12, wobei das Verfahren folgende Schritte umfasst:
- Erfassen eines horizontalen Abstands (W+L) zwischen zwei vordefinierten Positionen von Bausteinen (2, 2', 2"), die auf der gleichen vertikalen Ebene angeordnet werden sollen, und
- Positionieren eines Bausteins (2, 2', 2") in einer Position, in der der erfasste Abstand (W+L) einem vordefinierten Wert entspricht oder innerhalb eines vordefinierten Bereichs liegt.

## Revendications

1. Robot de construction (1) pour attacher des parpaings (2) contre une surface verticale d'un mur vertical (3),
dans lequel le robot (1) comprend un groupe de composants, le groupe de composants incluant
- un magasin (10) de parpaings (2), les parpaings (2) étant définis par une face d'attache pour l'attache au mur vertical (3), une seconde face opposée qui, après l'attache, fait face à l'opposé du mur (3), et des bords (2B) entourant la face d'attache et la seconde face ;
- un récipient de colle (12) ;
- un distributeur de colle (21) configuré pour distribuer automatiquement de la colle (14), à partir du récipient de colle (12), sur la face d'attache (2A) alors qu'elle est tournée vers le haut ;
- un transporteur (13) pour automatiquement recevoir un parpaing (2) à partir du magasin (10) et pour déplacer le parpaing depuis le magasin jusqu'au distributeur de colle (21) dans une orientation où la face d'attache (2A) du parpaing (2) est tournée vers le haut, pour recevoir de la colle fournie par le distributeur de colle (21) ; **caractérisé en ce que** le robot de construction (1) comprend en outre :
- une station d'organe de préhension (20) comprenant un organe de préhension suspendu de façon rotative et agencé pour recevoir le parpaing (2) à partir du transporteur (13) et pour prendre le parpaing (2) en utilisant l'organe de préhension, dans lequel l'organe de préhension est configuré pour retenir le parpaing (2) durant une rotation du parpaing (2) par la station d'organe de préhension (20) jusqu'à ce que la face d'attache (2A) soit verticale et fasse face à la surface verticale du mur vertical (3) ; et dans lequel la station d'organe de préhension (20) est configurée pour déplacer la face d'attache (2A) vers le mur (3) et avec la colle (14) en contact avec le mur (3) alors que le parpaing (2) est retenu par l'organe de préhension ;
dans lequel le robot (1) comprend également un bâti (4) comprenant une poutre verticale (5) et une poutre horizontale (6) pour suspendre le groupe et des moteurs (7) pour déplacer le groupe horizontalement et verticalement le long du mur (3) et pour déplacer l'organe de préhension (22) vers le mur (3) pour l'attache du parpaing (2) sur le mur (3), dans lequel les moteurs (7) sont commandés par une unité de commande (8) programmée avec des instructions informatiques pour séquentiellement attacher des parpaings (2) les uns après les autres contre le mur (3) à des emplacements prédéterminés ;
dans lequel l'organe de préhension comprend des mâchoires de serrage (22) configurées pour entrer en prise avec des bords opposés (2B) du parpaing (2) et retenir le parpaing (2) serré entre les mâchoires de serrage (22) par une force contre les bords (2B) ; dans lequel la station d'organe de préhension (20) est configurée pour recevoir le parpaing (2) à partir du transporteur (13) dans une première orientation et pour serrer les bords (2B) en utilisant les mâchoires de serrage (22), et, par la suite, tout en serrant les bords (2B), tourner les mâchoires de serrage (22), conjointement avec le parpaing (2), depuis la première orientation reçue jusqu'à une seconde orientation où la face d'attache (2A) est verticale et fait face au mur (3), dans lequel le robot de construction comprend une aile de contact (30) qui est mobile dans une direction vers le mur (3) indépendamment de la station d'organe de préhension (20) pour le contact avec le mur (3) avant un mouvement des mâchoires de serrage (2), avec le parpaing (2), vers et contre le mur (3), dans lequel une liaison mécanique (30C, 33) entre la station d'organe de préhension (20) et l'aile de contact (30) définit le mouvement des mâchoires de serrage (2) vers le mur (3) relativement à l'aile de contact (30), dans lequel la liaison mécanique comprend un galet de guidage (33) en tant que partie de la station d'organe de préhension (20) et une fente (30C) en tant que partie de l'aile de contact (30) pour l'insertion du galet de guidage (33) à l'intérieur de la fente (30C) durant l'avance des mâchoires de serrage (22) vers le mur (3).

2. Robot de construction (1) selon la revendication 1, dans lequel le robot de construction (1) comprend une unité de détection agencée et configurée pour détecter une distance horizontale (W+L) entre deux positions prédéfinies de parpaings (2, 2', 2") destinés à être agencés sur le même niveau vertical, dans lequel le robot de construction (1) est configuré pour positionner un parpaing (2, 2', 2") dans une position, dans laquelle la distance détectée (W+L) correspond à une valeur prédéfinie ou est au sein d'une plage prédéfinie.

3. Robot de construction (1) selon la revendication 2, dans lequel l'unité de détection est agencée et configurée pour détecter la distance entre la portion la plus à gauche d'un parpaing (2) et la portion la plus à gauche du parpaing adjacent (2').

4. Robot de construction (1) selon l'une des revendications précédentes, dans lequel les mâchoires de serrage (22) sont montées sur un axe rotatif (25) et configurées pour la rotation seulement dans une dimension de rotation pour mettre en rotation les mâchoires de serrage (22), conjointement avec le parpaing (2), depuis la première orientation jusqu'à la seconde orientation où la face d'attache (2A) est orientée verticalement pour l'attache à la surface verticale du mur vertical (3).

5. Robot de construction selon l'une des revendications précédentes, dans lequel la face d'attache (2A) dans la première orientation est vers le haut, et la station d'organe de préhension (20) est configurée pour recevoir le parpaing (2) à partir du transporteur (13), avec la face d'attache (2A) orientée vers le haut, et pour serrer les bords (2B) en utilisant les mâchoires de serrage (22) alors que la face d'attache (2A) est toujours orientée vers le haut.

6. Robot de construction selon l'une des revendications précédentes, dans lequel chacune des mâchoires de serrage (22) comprend une portion de support (22A) destinée à être contiguë à la seconde face du parpaing (2) et une portion de serrage (22B) destinée à serrer sur le bord, dans lequel la portion de serrage (22B) à une extrémité la plus en avant de la portion de serrage (22) est configurée pour l'inser-tion entre des parpaings adjacents (2) et pour définir une distance minimum entre les parpaings adjacents (2) lors du déplacement des mâchoires de serrage (22), avec le parpaing (2), vers le mur (3) pour monter le parpaing (2) à côté d'un autre.

7. Procédé d'attache automatique de parpaings contre une surface verticale d'un mur vertical (3) ;
dans lequel les parpaings (2) sont définis par une face d'attache pour l'attache au mur vertical (3), une seconde face opposée qui, après l'attache, fait face à l'opposé du mur (3), et des bords (2B) entourant la face d'attache et la seconde face ;
dans lequel le procédé comprend la fourniture d'un robot de construction selon une quelconque revendication précédente, et le robot réalisant automatiquement la séquence automatisée suivante d'étapes :
- sur un transporteur (13), la réception d'un parpaing (2) à partir d'un magasin (10) et le déplacement du parpaing (2) depuis le magasin (10) jusqu'à un distributeur de colle (21) dans une orientation où la face d'attache (2A) du parpaing (2) est tournée vers le haut ;
- par le distributeur de colle (21), la distribution de colle (14), à partir d'un récipient de colle (12), sur la face d'attache (2A) alors qu'elle est tournée vers le haut ;
- par une station d'organe de préhension (20), qui comprend un organe de préhension suspendu de façon rotative, la réception du parpaing (2) à partir du transporteur (13) et la prise du parpaing (2) par l'organe de préhension et la retenue du parpaing (2) durant une rotation du parpaing (2), par la station d'organe de préhension (20), jusqu'à ce que la face d'attache (2A) soit verticale et fasse face à la surface verticale du mur vertical (3) ; et, par la station d'organe de préhension (20), le déplacement de la face d'attache (2A) vers le mur (3) et la mise de la colle (14) en contact avec le mur (3) alors que le parpaing (2) est retenu par l'organe de préhension ;
par un bâti (4) comprenant une poutre verticale (5) et une poutre horizontale (6) suspendant le groupe, l'utilisation de moteurs (7) pour déplacer le groupe horizontalement et verticalement le long du mur (3) et le déplacement de l'organe de préhension (22) vers le mur (3) pour l'attache du parpaing (2) sur le mur (3), dans lequel les moteurs (7) sont commandés par une unité de commande (8) programmée avec des instructions informatiques pour séquentiellement attacher des parpaings (2) les uns après les autres contre le mur (3) à des emplacements prédéterminés ;
dans lequel l'organe de préhension comprend des mâchoires de serrage (22) entrant en prise avec des bords opposés (2B) du parpaing (2) et retenant le parpaing (2) serré entre les mâchoires de serrage (22) par force contre les bords (2B) ; dans lequel la station d'organe de préhension (20) reçoit le parpaing (2) à partir du transporteur (13) dans une première orientation et serre les bords (2B) en utilisant les mâchoires de serrage (22), et, par la suite, tout en serrant les bords (2B), tourne les mâchoires de serrage (22), conjointement avec le parpaing (2), depuis la première orientation reçue jusqu'à une seconde orientation où la face d'attache (2A) est verticale et fait face au mur (3), dans lequel le robot de construction (1) comprend une aile de contact (30) qui est mobile dans une direction vers le mur (3), indépendamment de la station d'organe de préhension (20), pour contact avec le mur (3), et dans lequel le procédé comprend d'abord le déplacement de l'aile de contact (30) en contact avec le mur (3) et puis le déplacement des mâchoires de serrage (2), avec le parpaing (2), vers et contre le mur (3), dans lequel une liaison mécanique (30C, 33) entre la station d'organe de préhension (20) et l'aile de contact (30) définit le mouvement des mâchoires de serrage (2) vers le mur (3) relativement à l'aile de contact (30), dans lequel la liaison mécanique comprend un galet de guidage (33) en tant que partie de la station d'organe de préhension (20) et une fente (30C) en tant que partie de l'aile de contact (30), et dans lequel le procédé comprend l'insertion du galet de guidage (33) à l'intérieur de la fente (30C) durant l'avance des mâchoires de serrage (22) vers le mur (3).

8. Procédé selon la revendication 7, dans lequel les mâchoires de serrage (22) sont montées sur un axe rotatif (25) et configuré pour la rotation seulement dans une dimension de rotation, et dans lequel le procédé comprend la mise en rotation des mâchoires de serrage (22), conjointement avec le parpaing (2), sur l'axe rotatif (25) depuis la première orientation jusqu'à la seconde orientation.

9. Procédé selon la revendication 7 ou 8, dans lequel la face d'attache (2A) dans la première orientation est vers le haut, et la station d'organe de préhension (20) reçoit le parpaing (2) à partir du transporteur (13), avec la face d'attache (2A) orientée vers le haut, et serre les bords (2B) en utilisant les mâchoires de serrage (22) alors que la face d'attache (2A) est toujours orientée vers le haut.

10. Procédé selon l'une des revendications 7 à 9, dans lequel chacune des mâchoires de serrage (22) comprend une portion de support (22A) destinée à être contiguë à la seconde face du parpaing (2) et une portion de serrage (22B) destinée à serrer sur le bord, dans lequel la portion de serrage (22B) à une extrémité la plus en avant de la portion de serrage (22) comprend une partie arrondie (22C), dans lequel le procédé comprend l'insertion de l'extrémité la plus en avant entre des parpaings adjacents (2) pour définir une minimum distance entre les parpaings adjacents (2) tout en déplaçant les mâchoires de serrage (22), avec le parpaing (2), vers le mur (3) et pour monter le parpaing (2) à côté d'un autre.

11. Procédé selon l'une quelconque des revendications 7 à 10, dans lequel le procédé comprend la fourniture d'une façade profilée (3B) en tant que partie du mur (3), la façade profilée comprenant des rebords horizontaux équidistants (17), avec des tranchées (16) entre ceux-ci, pour l'insertion des parpaings (2) dans les tranchées (16), dans lequel l'aile de contact (30) comprend une entaille (30B) pour l'insertion d'un rebord horizontal (17) dans l'entaille (30B), et dans lequel le procédé comprend en outre le déplacement de l'aile de contact (30) sur la façade profilée (3B) et l'insertion d'un rebord (17) à l'intérieur de l'entaille (30B) pour fixer une position de l'aile de contact (30) relativement au rebord (17) et à la tranchée (16), et puis le déplacement des mâchoires de serrage (22), avec le parpaing (2), vers et contre la façade profilée (3B) et le positionnement du parpaing (2) à l'intérieur de la tranchée (16), avec la colle contre la façade profilée (3b) à l'intérieur de la tranchée (16) et avec le parpaing (2) reposant sur le rebord (17) en tant que support.

12. Procédé selon l'une des revendications 7 à 11, dans lequel le procédé comprend la fourniture des parpaings sous forme de dalle qui est allongée dans une direction longitudinale de la dalle et qui comprend deux extrémités, les deux extrémités comprenant les bords avec les zones les plus petites, et dans lequel le procédé comprend le transport de la dalle allongée sur le transporteur (13) dans une direction de transport, où la direction longitudinale est parallèle à la direction de transport, puis la préhension du parpaing (2), par les mâchoires de serrage (22), contre l'une ou l'autre extrémité de la dalle, et l'orientation de la dalle pour l'attache au mur, alors que la direction longitudinale est orientée horizontalement.

13. Procédé selon l'une des revendications 7 à 12, dans lequel le procédé comprend l'étape de :
- la détection d'une distance horizontale (W+L) entre deux positions prédéfinies de parpaings (2, 2', 2") destinés à être agencés sur le même niveau vertical, et
- le positionnement d'un parpaing (2, 2', 2") dans une position, dans laquelle la distance détectée (W+L) correspond à une valeur prédéfinie ou est au sein d'une plage prédéfinie.
